# FASCICULE DE BREVET EUROPEEN

(11) **EP 0 583 348 B1**
(45) Date de publication et mention de la délivrance du brevet: **28.06.1995**
(21) Numéro de dépôt: 92910891.8
(22) Date de dépôt: 05.05.1992
(51) Int. Cl.: G06K 19/073, G07F 7/10

(54) **PROCEDE DE VERROUILLAGE POUR CARTE A MEMOIRE**
VERRIEGELUNGSVERFAHREN FUER EINE SPEICHERKARTE
METHOD FOR BLOCKING SMART CARD

(30) Priorité: 06.05.1991 FR 9105514
(43) Date de publication de la demande: 23.02.1994
(73) Titulaire: GEMPLUS CARD INTERNATIONAL, F-13420 Gémenos (FR)
(72) Inventeur: GERONIMI, François, F-13090 Aix-en-Provence (FR)
(74) Mandataire: Schmit, Christian Norbert Marie
(86) Numéro de dépôt international: FR9200407
(87) Numéro de publication internationale: WO9220042

(56) Documents cités:
- EP-A- 0 292 658
- FR-A- 2 635 893
- US-A- 4 734 568

## Description

La présente invention se rapporte aux procédés qui permettent de verrouiller les cartes à mémoire, essentiellement pour empêcher les utilisations frauduleuses de celles-ci.

Les cartes à mémoire, dites aussi "cartes à puce" sont très souvent utilisées dans des applications, bancaires par exemple, qui nécessitent une grande sécurité contre les usages frauduleux. L'usage frauduleux peut être le fait non seulement d'un voleur, mais aussi du possesseur régulier de la carte. En effet, dans les différentes étapes, fabrication de la puce, transport, personnalisation ..., qui précèdent la remise de la carte au client, on limite peu à peu le champs d'action d'un composant (la puce) qui peut avoir au départ des usages multiples. S'il peut alors reprendre en amont ces étapes, le possesseur de la carte pourra utiliser celle-ci pour des usages auxquels il n'est pas autorisé, des retraits bancaires multiples par exemple, ou excédant le plafond prévu.

Il est connu d'interdire ce genre de chose en verrouillant chacune de ces étapes par des verrous logiques qui empêchent de relancer les opérations correspondant à ces étapes. Ces verrous sont généralement formés d'un bit (ou d'un mot) inscrit dans la mémoire non volatile (EPROM ou EEPROM) du circuit de la carte à la fin de l'étape en cours. Le programme qui correspond à cette étape vient tester, avant de démarrer, la présence de ce bit et ne démarre pas si celui-ci est reconnu.

Cette solution n'est pas totalement satisfaisante, parce qu'il arrive que ces verrous s'effacent accidentellement.

En outre , lors du démarrage du système à la mise sous tension de la carte, on passe nécessairement par une phase d'initialisation qui peut permettre aux fraudeurs de neutraliser la mémoire volatile (RAM) et d'outrepasser le verrouillage.

Enfin, on ne peut pas tester complètement le composant de la carte à la fin de la fabrication de celui-ci, puisque cela impliquerait d'activer les verrous et empêcherait de revenir en arrière pour livrer au fabricant de la carte des composants non personnalisés. On est donc obligé de tester le composant puis la carte à chaque étape entre la fabrication du composant, en plaçant les verrous successivement.

Pour pallier ces inconvénients, l'invention propose un procédé de verrouillage pour carte à mémoire comprenant un processeur central, une mémoire morte ROM, une mémoire inscriptible EPROM et une mémoire vive RAM, dans lequel on bloque avec un verrou logique inscrit dans l'EPROM le fonctionnement d'au moins un programme exécutable protégé mémorisé dans la ROM, caractérisé en ce que l'on copie plusieurs fois ce verrou logique dans l'EPROM, et que l'on effectue un OU logique sur l'ensemble du verrou original et de ses copies pour bloquer le déroulement du programme protégé sur la détection d'au moins un verrou correspondant à ce programme protégé.

D'autres particularités et avantages de l'invention apparaîtront clairement dans la description suivante, présentée à titre d'exemple non limitatif en regard des figures annexées, qui représentent :
- la figure 1, le schéma d'un composant pour carte à mémoire;
- la figure 2, un organigramme de contrôle d'un verrou; et
- la figure 3, un organigramme de copie d'un verrou.

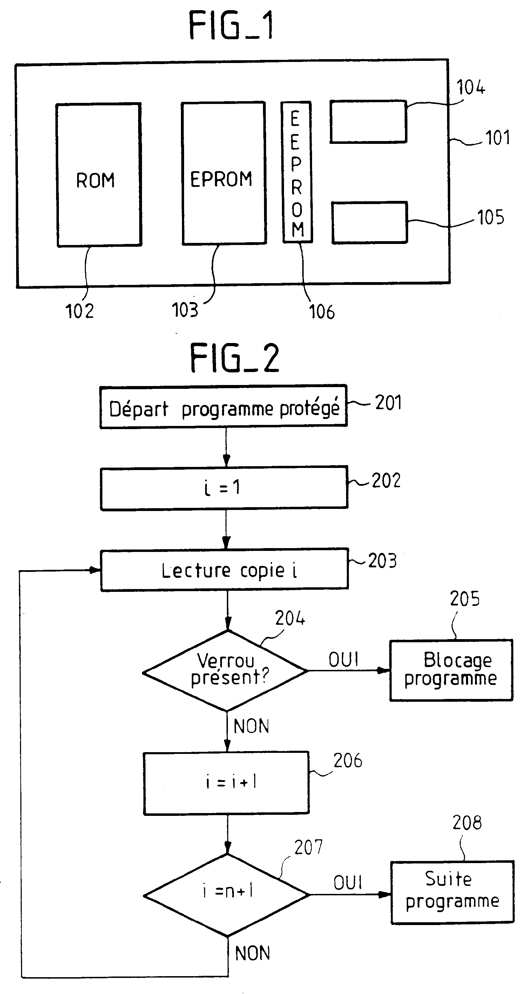

Le composant 101 pour carte à mémoire représenté sur la figure 1, est un circuit intégré qui comporte dans cet exemple une mémoire morte 102 (ROM), une mémoire inscriptible 103 (EPROM), un processeur central 104 (CPU) et une mémoire vive 105 (RAM). Il peut comporter une mémoire programmable et effaçable électriquement (EEPROM) 106. Ce dispositif est connu et on n'a pas représenté les liaisons entre ces différentes parties. Le CPU (104) est un organe du type microprocesseur qui utilise un programme exécutable figé à la fabrication du composant dans la ROM 101, ainsi que des données inscrites dans l'EPROM 103 lors des différentes étapes, personnalisation par exemple, qui suivent cette fabrication du composant jusqu'à la remise de la carte au client final. La RAM 105 permet au CPU d'inscrire et d'utiliser des données temporaires pendant son fonctionnement. Elle s'efface lorsque la carte n'est plus sous tension.

Dans l'art connu, à chaque étape importante de la fabrication de la carte on inscrit un verrou dans l'EPROM 103. Quand il y a une mémoire EEPROM on ne stocke pas les verrous dans cette mémoire car le risque existe que ces verrous soient effacés par le processeur central. Par exemple, lorsque la personnalisation de la carte est terminée on inscrit un verrou qui empêche de recommencer cette personnalisation. La personnalisation est une opération qui consiste à inscrire dans l'EPROM des données particulières à l'utilisateur, et cette inscription est faite par le CPU à l'aide d'un programme présent en ROM, sous la commande d'instructions provenant de l'extérieur. Le programme contient des instructions qui permettent de vérifier si le verrou est présent dans l'EPROM, et d'interdire l'inscription dans l'EPROM dans ce cas. Cette interdiction se fait généralement par blocage des différents éléments du programme qui permettent la personnalisation.

Selon l'invention, on stocke dans l'EPROM plusieurs copies des verrous, et on vérifie lors de l'exécution de l'un des programmes protégés par l'un de ces verrous l'ensemble de l'original et des copies du verrou correspondant à ce programme. Si au moins un seul des verrous ainsi vérifiés est reconnu, le déroulement du programme protégé est interrompu. Ceci consiste donc à faire un OU logique sur la présence des verrous pour interdire l'exécution du programme. Exprimé d'une autre manière, on effectue un ET logique sur l'absence de verrous pour autoriser l'exécution du programme. Cette dualité de présentation est courante en informatique et correspond par exemple à celle qui est induite par la définition des niveaux haut et bas. Dans la suite du texte, nous nous placerons dans la première présentation, où l'on effectue un OU logique pour interdire l'exécution du programme. De même, on se limitera à la description des opérations pour un seul verrou protégeant un seul programme. L'extension à plusieurs verrous distincts est immédiate.

Les copies des verrous sont de préférence stockées à des emplacements disjoints et répartis sur toute l'étendue de l'EPROM, de manière à pallier l'effet d'un défaut local de la puce et à compliquer les efforts d'un fraudeur éventuel.

Ce OU logique peut s'effectuer par exemple selon un organigramme représenté sur la figure 2. Après le départ dans une étape 201 du programme protégé, on positionne à 1 (202) un indice courant i. On lit ensuite dans une étape 203 l'original du verrou à vérifier, puis on effectue un test 204 sur son existence (valeur du bit affecté à ce verrou). Si celui-ci est présent, le programme se bloque (205). S'il est absent, on incrémente (206) de 1 l'indice i. On effectue ensuite un test 207 sur la valeur de i. Tant que i est inférieur ou égal à n + 1, où n est le nombre de copies (original compris) du verrou à vérifier, on repart à l'étape 203, ce qui permet de lire la copie suivante du verrou. Quand i est égal à n + 1, cela signifie que l'on a testé la présence du verrou et de toutes ses copies et que l'on n'en a trouvé aucune. On passe donc à la suite (208) de l'exécution du programme, qui a été autorisée par cette absence.

Cet organigramme effectue donc bien un OU logique, puisque la présence d'une seule copie du verrou bloque l'exécution du programme. La lecture des copies suivantes est bien sûr inutile.

Pour éviter les fraudes lors de la séquence d'initialisation à la mise sous tension de la carte, l'invention propose aussi d'inscrire le verrou dans la RAM en le recopiant à partir des copies situées dans l'EPROM. Le test de blocage du programme protégé se fait alors par un OU logique sur les copies en EPROM et sur la copie (éventuellement les copies) en RAM.

En outre, lors du déroulement de tous les programmes exécutables on lance de temps en temps un programme de mise à jour de cette copie en RAM, de manière à être sûr que le verrou est toujours dans la RAM.Ce programme de mise à jour peut être lancé régulièrement par un compteur, ou de manière aléatoire par un programme de génération d'événements aléatoires de type connu par ailleurs.

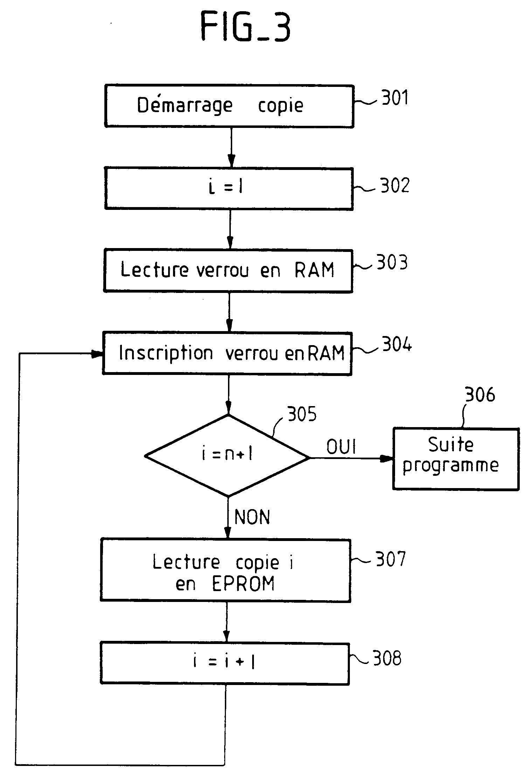

Cette copie peut s'effectuer par exemple selon un organigramme représenté sur la figure 3. Après le démarrage de la copie dans une étape 301, on positionne à 1 (302) un indice courant i. On lit ensuite (303) le verrou qui a été copié dans la RAM et on réinscrit (304) celui-ci au même endroit. On teste (305) alors la valeur de l'indice i, et tant que cet indice n'est pas égal à n + 1 on passe à une étape 307 où l'on lit dans l'EPROM la copie i (original compris) du verrou. Après cette lecture, on incrémente (308) i de 1 et on vient inscrire le verrou dans la RAM au même emplacement que précédemment, en revenant donc à l'étape 304. Lorsque i = n +1, toutes les copies de l'EPROM ont été lues et on sort alors de l'étape de test 305 pour passer à la suite du programme (306) qui a été interrompu pour lancer ce programme de mise à jour de la copie du verrou en RAM.

Le cas échéant, ce programme peut comporter une étape de test supplémentaire qui amène sur la sortie en 306 dès que l'on a reconnu la présence du verrou en RAM, c'est-à-dire dès la première lecture de celui-ci à l'étape 303 dans le cas normal où le verrou n'a pas été effacé. On a bien toujours un OU logique, et les opérations sont plus rapides.

Ainsi donc on dispose en permanence des copies du verrou dans l'EPROM et de la copie dans la RAM. On peut donc tester lors du démarrage par l'utilisateur de chaque opération, correspondant à un programme, la présence non seulement des copies dans l'EPROM mais aussi de celle dans la RAM, et interdire donc ce démarrage en constatant cette présence. Il est alors impossible à un fraudeur de faire tourner les programmes auxquels il n'a pas accès en manipulant, lors de l'initialisation par exemple, le contenu de la RAM.

Bien entendu, ce test de la présence des copies du verrou peut s'effectuer pendant le déroulement des programmes, de manière régulière ou irrégulière.

De même, on peut aussi copier le verrou à plusieurs endroits différents dans la RAM.

Enfin, l'invention propose d'utiliser, lors des séquences de test de la puce,et même lors des séquences ultérieures tout au long de la fabrication de la carte à puce, un "faux" verrou inscrit uniquement dans la RAM. Pour cela le programme de test, qui permet de vérifier le fonctionnement de la puce en simulant par exemple le déroulement des programmes normaux, évite d'inscrire les verrous et leurs copies dans l'EPROM et utilise seulement une copie, "fausse" en quelque sorte, inscrite dans la RAM. Ainsi on vérifie bien que la présence de cette copie en RAM bloque les programmes interdits, vérification qui est essentielle, mais lorsque l'alimentation de la puce est coupée, le contenu de la RAM s'efface et le faux verrou disparaît. On peut aussi inscrire un "faux" verrou dans la mémoire EEPROM, pour tester de façon plus complète le composant, sachant qu'on pourra l'effacer par la suite par une commande adéquate.

Ainsi donc on dispose alors d'une puce vierge qui peut être livrée au manufacturier qui doit effectuer l'étape suivante de la fabrication. Eventuellement la fabricant de la puce y inscrit un premier verrou qui bloque les programmes qu'il entend se réserver.

Cette opération peut être répétée à chaque étape de la fabrication de la carte et ainsi chaque manufacturier peut tester le fonctionnement de la carte en aval, mais pas en amont. De cette manière on peut déceler précocement une anomalie qui ne se verrait que dans une étape ultérieure et rejeter alors le produit en cours de fabrication, ce qui économise les coûts d'une fabrication ultérieure qui ne mènerait qu'à un produit inutilisable.

## Revendications

1. Procédé de verrouillage pour carte à mémoire comprenant un processeur central (104),une mémoire morte ROM (102), une mémoire inscriptible EPROM (103) et une mémoire vive RAM (105), dans lequel on bloque avec un verrou logique inscrit dans l'EPROM le fonctionnement d'au moins un programme exécutable protégé mémorisé dans la ROM, caractérisé en ce que l'on copie plusieurs fois ce verrou logique dans l'EPROM, et que l'on effectue un OU logique (203-208) sur l'ensemble du verrou original et de ses copies pour bloquer le déroulement du programme protégé sur la détection d'au moins un verrou correspondant à ce programme protégé.

2. Procédé selon la revendication 1, caractérisé en ce que les copies sont stockées à des emplacements disjoints répartis sur toute l'étendue de l'EPROM.

3. Procédé selon l'une quelconque des revendications 1 et 2, caractérisé en ce que l'on copie (301-308) en outre le verrou dans la RAM, et que l'on effectue le OU logique sur le verrou original, ses copies dans l'EPROM et ses copies dans la RAM.

4. Procédé selon la revendication 3, caractérisé en ce que l'on effectue des mises à jour des copies du verrou dans la RAM pendant le déroulement des programmes exécutables.

5. Procédé selon la revendication 4, caractérisé en ce que ces mises à jour sont faites à intervalles de temps aléatoires.

6. Procédé selon l'une quelconque des revendications 1 à 5, caractérisé en ce que préalablement à l'inscription du verrou original dans l'EPROM on inscrit un "faux" verrou dans la RAM pour tester momentanément le blocage du programme protégé; ce "faux" verrou et le blocage correspondant disparaissant lorsque la carte est mise hors tension.

7. Procédé selon l'une quelconque des revendications 1 à 5, caractérisé en ce que préalablement à l'inscription du verrou original dans l'EPROM on inscrit un "faux" verrou dans une EEPROM (106) contenue dans la carte pour tester momentanément le blocage du programme protégé; ce verrou et le blocage correspondant étant ultérieurement effacé par une action adéquate.

8. Procédé selon l'une quelconque des revendications 1 à 7, caractérisé en ce que l'on utilise plusieurs verrous pour bloquer chacun un programme exécutable.

## Patentansprüche

1. Verfahren zum Sperren einer Speicherkarte mit einem Zentralprozessor (104), einem ROM (Nur-Lese-Speicher) (102), einem beschreibbaren EPROM-Speicher (103) und einem RAM (Schreib-Lese-Speicher) (105), bei dem mit einem ins EPROM eingeschriebenen logischen Sperrschlüssel der Betrieb wenigstens eines im ROM gespeicherten ausführbaren Programms gesperrt wird,
dadurch gekennzeichnet, daß
der logische Sperrschlüssel mehrere Male ins EPROM kopiert wird und eine logische ODER-Verknüpfung an der Gesamtheit aus ursprünglichem Sperrschlüssel und seinen Kopien vorgenommen wird (203 - 208), um die Ausführung des geschützten Programms zu sperren, wenn wenigstens ein diesem geschützten Programm entsprechender Sperrschlüssel erfaßt wird.

2. Verfahren nach Anspruch 1, dadurch gekennzeichnet, daß die Kopien an über das gesamte EPROM verteilten, disjunkten Stellen gespeichert werden.

3. Verfahren nach einem der Ansprüche 1 oder 2, dadurch gekennzeichnet, daß der Sperrschlüssel auch ins RAM kopiert wird (301 - 308), und daß die logische ODER-Verknüpfung am ursprünglichen Sperrschlüssel, seinen Kopien im EPROM und seinen Kopien im RAM vorgenommen wird.

4. Verfahren nach Anspruch 3, dadurch gekennzeichnet, daß Aktualisierungen der Kopien des Sperrschlüssels im RAM während des Ablaufs der ausführbaren Programme vorgenommen werden.

5. Verfahren nach Anspruch 4, dadurch gekennzeichnet, daß die Aktualisierungen in zufälligen Zeitabständen vorgenommen werden.

6. Verfahren nach einem der Ansprüche 1 bis 5, dadurch gekennzeichnet, daß vor dem Eintragen des ursprünglichen Sperrschlüssels ins EPROM ein "falscher" Sperrschlüssel ins RAM eingetragen wird, um kurzzeitig die Sperrung des geschützten Programms zu testen, wobei der "falsche" Sperrschlüssel und die zugehörige Sperrung verschwinden, wenn die Spannungsversorgung der Karte abgebrochen wird.

7. Verfahren nach einem der Ansprüche 1 bis 5, dadurch gekennzeichnet, daß vor dem Eintragen des ursprünglichen Sperrschlüssels ins EPROM ein "falscher" Sperrschlüssel in ein in der Karte enthaltenes EEPROM (106) eingetragen wird, um kurzzeitig die Sperrung des geschützten Programms zu testen, wobei der "falsche" Sperrschlüssel und die zugehörige Sperrung nachträglich durch eine geeignete Maßnahme beseitigt werden.

8. Verfahren nach einem der Ansprüche 1 bis 7, dadurch gekennzeichnet, daß mehrere Sperrschlüssel verwendet werden, um jeweils ein ausführbares Programm zu sperren.

## Claims

1. Method for blocking a smart card, comprising a central processor (104), a read-only memory ROM (102), an inscribable memory EPROM (103) and a live memory RAM (105), wherein by means of a logic lock written into the EPROM the operation of at least one protected executable program memorized in the ROM is blocked, characterised by the fact that this logic lock is copied a number of times in the EPROM and that a logic OR (203-208) is effected on the whole of the original lock and of its copies in order to block the operation of the protected program on the detection of at least one block corresponding to the said protected program.

2. Method in accordance with claim 1, characterised by the fact that the copies are stored in separate positions distributed throughout the EPROM.

3. Method in accordance with either of claims 1 and 2, characterised by the fact that the lock is also copied (301-308) in the RAM and that the logic OR is effected on the original lock, its copies being effected in the EPROM and its copies in the RAM.

4. Method in accordance with claim 3, characterised by the fact that updates of the copies of the lock are effected in the RAM during the operation of the executable programs.

5. Method in accordance with claim 4, characterised by the fact that these updates are effected at random time intervals.

6. Method in accordance with any one of claims 1 to 5, characterised by the fact that before the original lock is written into the EPROM a "false" lock is written into the RAM for the momentary testing of the blocking of the protected program; this "false" lock and the corresponding blocking disappearing when the card is disconnected from the voltage.

7. Process in accordance with any one of claims 1 to 5, characterised by the fact that before the original lock is written into the EPROM a "false" lock is written into an EPROM (106) contained in the card for the momentary testing of the blocking of the protected program; this lock and the corresponding blocking being subsequently effaced by asuitable action.

8. Process in accordance with any one of claims 1 to 7, characterised by the fact that use is made of a number of locks, each serving to block one executable program.
